# EUROPEAN PATENT SPECIFICATION

(11) **EP 3 018 363 B1**
(45) Date of publication and mention of the grant of the patent: **13.11.2019**
(21) Application number: 14820075.1
(22) Date of filing: 08.04.2014
(51) Int. Cl.: F04D 29/54, F01D 9/02, F02K 3/06

(54) **STATOR VANE STRUCTURE AND TURBOFAN JET ENGINE USING SAME**
STATORSCHAUFELSTRUKTUR UND TURBOSTRAHL-DÜSENTRIEBWERK DAMIT
STRUCTURE D'AUBE DE STATOR ET MOTEUR À DOUBLE FLUX UTILISANT CELLE-CI

(30) Priority: 02.07.2013 JP 2013138845
(43) Date of publication of application: 11.05.2016
(73) Proprietor: IHI Corporation, Tokyo 135-8710 (JP)
(72) Inventor: OBUCHI, Kenro, Tokyo 135-8710 (JP); YAGI, Hiroyuki, Tokyo 135-8710 (JP)
(74) Representative: Epping - Hermann - Fischer
(86) International application number: PCT/JP2014/060152
(87) International publication number: WO 2015/001827

(56) References cited:
- EP-A1- 2 286 983
- EP-A2- 2 290 194
- EP-A2- 2 405 101
- DE-C1- 19 627 860
- JP-A- 2006 300 057
- JP-A- 2006 336 648
- JP-A- 2009 085 212
- US-A- 3 762 835

## Description

### Technical Field

Embodiments described herein relate to a stator vane structure that connects an engine body section side and a fan case of a turbofan jet engine for an aircraft, for example.

### Background Art

In document EP 2290194 A2 an aerofoil having an erosion resistant leading edge is described. The aerofoil comprises an aerofoil main body portion and a leading edge portion. The leading edge portion comprises a plurality of functionally distinct parts, including at least; a first part for resisting abrasion of the leading edge portion, and a second part for resisting a bending force applied to the leading edge portion, and located behind the first part.

Document EP 2405101 A2 discloses a composite turbomachine blade which comprises a composite material including reinforcing fibres in a matrix material. The turbomachine blade further comprises an aerofoil portion, a shank portion and a root portion. The composite turbomachine blade also has a metallic protective member arranged in the region of a leading edge of the aerofoil portion of the turbomachine blade.

Document DE 19627860 C1 discloses a blade for fluid flow machine such as a jet turbine engine having a metallic coating layer. The blade includes a blade body that is to be exposed to the fluid flow and therefore is subject to damage by erosion due to abrasive particle entrained in the fluid flow and due to thermal loading. The blade body is a layered body including base layers of a fiber reinforced synthetic material and a metallic cover layer applied as an erosion protective layer onto at least a portion or the entirety of the surface of the base layers.

In document US 3762835 A a protection for compressor blades in view of foreign object damages is described to enable improvements in compressor blades employed in gas turbine engines for the propulsion of an aircraft. Such a composite compressor rotor blade having a cambered airfoil portion and an attachment tang at the hub end thereof. The airfoil portion comprises elongated, small diameter filaments, having high strength and high modulus of elasticity.

The disclosure of document EP 2 286 983 A1, which is considered to show the technical features of the preamble of independent claim 1, relates to an electrical conductor path in a fibre reinforced structure, for example an aerofoil vane or other gas path structure in a gas turbine machine such as a gas turbine engine. An insulated electrical conductor path is embedded therein and an electromagnetic shielding for the embedded electrical conductor path is provided structurally integrally.

A turbofan jet engine as described above is conventionally equipped with rotor blades that introduce air into an engine body section, and guide vanes which are stator vanes that control a flow of the air which is introduced by the rotor blades.

There are the case where only a controlling function is demanded from the guide vanes, and the case where a structure function that connects a fan frame and a fan case that constitute the engine body section is also demanded from the guide vanes, in addition to the controlling function.

As the guide vane for the structure, a metal material such as an aluminum alloy is used as a composing material, whereas in recent years, use of a composite material of a thermosetting resin or a thermoplastic resin, and reinforced fibers such as carbon fibers or glass fibers has been advanced. A composite material like this has a light weight, high strength and high durability, and use of the composite material is advanced not only in guide vanes but also in the other structures such as a fan case, and a main wing of an aircraft.

However, since composite materials as above have a higher electric resistance as compared with metal materials, a section using a composite material as the structure cannot bear a lightning current that occurs due to a lightning strike, and there arises the problem of generating a fiery particle (spark).

Therefore, a main wing structure is developed, in which a metal fixed leading edge and a fixed trailing edge that electrically connect a wing end to a wing root that is in contact with a body conductive section are formed in order to restrain generation of a high voltage by a lightning strike, in a main wing equipped with a fuel tank formed from a composite material, for example (refer to Patent Document 1).

### Prior Art Document

### Patent Document

Patent Document 1: Japanese Patent Laid-Open No. 2011-51517

### Summary

### Problems to be Solved

In the structure which can ensure a relatively large area such as a wing of an aircraft as described in Patent document 1 described above, a metal material for a lightning strike can be easily added, but in a structure which is a relatively small structure like the guide vanes of a turbofan jet engine, and also needs to perform a controlling function, it is not easy to provide the metal material for a lightning strike.

Meanwhile, when the metal material for a lightning strike is provided, there arises a demand that inspection of whether or not the metal material allows electricity to continue without being interrupted halfway can be easily performed.

The present disclosure is made to solve the problem as above, and an object of the disclosure is to provide a stator vane structure that can fend off a lightning current due to a lightning strike while ensuring a controlling function of stator vanes formed from a composite material, and also facilitates inspection, and a turbofan jet engine using the stator vane structure.

### Means for Solving the Problems

In order to achieve the above described object, a stator vane structure according to the present disclosure includes a fan case of a turbofan jet engine, an engine body section of the turbofan jet engine, a stator vane that connects the fan case and the engine body section, and is formed from a composite material of a thermosetting resin or a thermoplastic resin and reinforced fibers, a metal for erosion prevention that covers at least a leading edge section of the stator vane, a pair of connecting support bodies that connect first end of the stator vane and the fan case, and second end of the stator vane and the engine body section, and is formed from a metal, and a conductor that passes through a space between the leading edge section of the stator vane and the metal for erosion prevention, and connects the connecting support bodies at the first end and second end.

### Advantageous Effects

According to the stator vane structure according the present disclosure using the above described measures, even in a case where a composite material with high electric resistance is adopted as the stator vane, a lightning current that is received by the fan case can be passed to the engine body section side via the conductor. Further, by passing the conductor through the space between the leading edge section of the stator vane and the metal for erosion prevention, the controlling function can be ensured, and an inspection can be performed easily.

Further, the turbofan jet engine which adopts the stator vane structure can ensure resistance to a lightning strike while obtaining a light weight, high strength and high durability by the stator vanes formed from the composite material.

### Brief Description of the Drawings

FIG. 1 is a partial sectional view in a front side upper portion of a jet engine that adopts a stator vane structure according to one embodiment of the present disclosure.
FIG. 2A is a perspective view showing a distal end portion of a guide vane in detail.
FIG. 2B is a perspective view showing a proximal end portion of the guide vane in detail.
FIG. 3A is a sectional view of the guide vane along a line A-A in FIG. 1.
FIG. 3B is a sectional view showing a modification example of the guide vane.

### Mode for Carrying out the Disclosure

Hereinafter, the present disclosure will be described based on the drawings.

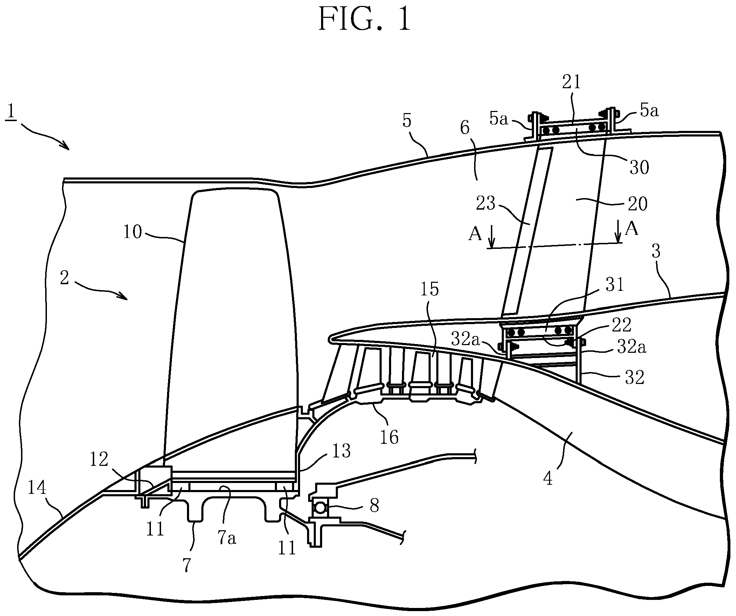

FIG. 1 shows one embodiment of a vane structure according to the present disclosure, and in the embodiment, a guide vane as a stator vane that constitutes a turbofan jet engine will be described by being cited as an example.

As shown in FIG. 1, in a turbofan jet engine 1 (hereinafter, simply referred to as a jet engine 1), an annular core flow passage 4 is formed at an axis side of an engine internal cylinder 3 in an engine body section 2, and a bypass flow passage 6 is formed between an inner peripheral surface of a fan case 5 that is an outer part of the engine body section 2 and an outer circumferential surface of the engine internal cylinder 3.

At a front part that is at an upstream side of an air flow (a left side in the drawing) of the jet engine 1, a fan disk 7 is placed to be rotatable around an engine axis not illustrated via a bearing 8. The fan disk 7 is integrally connected to a turbine rotor in a low-pressure turbine not illustrated that is placed at a rear part which is at a downstream side of the air flow (a right side in the drawing) of the jet engine 1.

Further, on an outer peripheral surface of the fan disk 7, a plurality of rotor blades 10 are placed equidistantly in a circumferential direction via a fitting groove 7a, and at a front and a rear in a space between the rotor blade 10 and the fitting groove 7a, spacers 11 and 11 are placed. At a front part and a rear part of the fan disk 7, annular retainers 12 and 13 that support the rotor blade 10 are respectively placed integrally in a circumferential direction, the retainer 12 at the front part is integrally connected to a nose cone 14, and the retainer 13 at the rear part is coaxially and integrally connected to a rotor 16 in a low-pressure compressor 15 that is adjacent to a downstream side of the fan disk 7.

That is to say, at a time of operation of the jet engine 1, the plurality of rotor blades 10 are rotated with the fan disk 7, and thereby air can be introduced into the core flow passage 4 and the bypass flow passage 6.

The jet engine 1 is equipped with a plurality of guide vanes (stator vanes) 20 on the bypass flow passage 6. The plurality of guide vanes 20 are placed in a periphery of the engine internal cylinder 3 so as to rectify a swirl air flow that flows in the bypass flow passage 6. The guide vane 20 is formed by being laminated in a vane thickness direction or woven three-dimensionally, for example, with a composite material of a thermosetting resin such as an epoxy resin, a phenol resin, or a polyimide resin, or a thermoplastic resin such as a polyether imide, a polyether ether ketone, or a polyphenylene sulfide, and reinforced fibers such as carbon fibers, aramid fibers or glass fibers used as a composing material.

A distal end portion 21 that is at a side (first end) away from an axis of the guide vane 20 is connected to fitting flanges 5a and 5a that are placed at the fan case 5 via a connecting support body 30, and a proximal end portion 22 at an axis side (second end) of the guide vane 20 is connected to fitting flanges 32a and 32a of a fan frame 32 that is placed at the engine internal cylinder 3 via a connecting support body 31.

Further, on a surface of a leading edge section of the guide vane 20, a sheath 23 that is a metal for erosion prevention for preventing abrasion due to collision with matters or the like is provided. The sheath 23 is a plate material of a titanium alloy, for example, and is bonded so as to cover a leading edge of the guide vane 20.

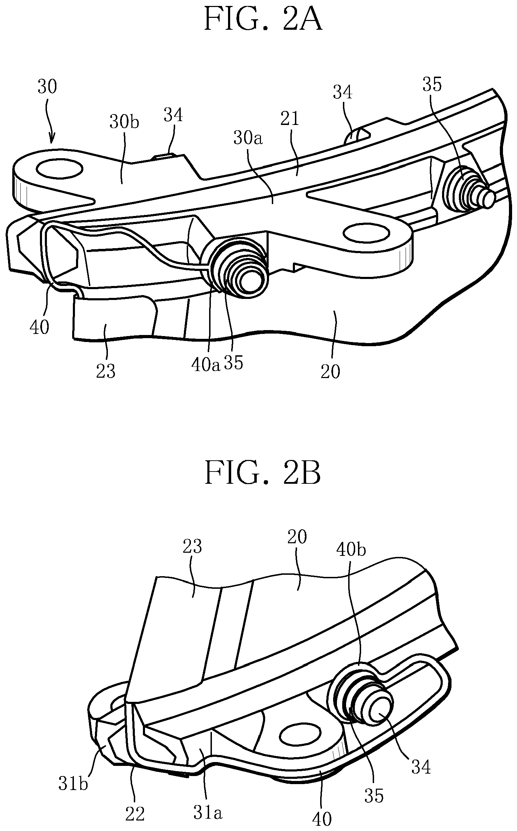

Here, referring to FIG. 2A and FIG. 2B, FIG. 2A shows a perspective view of a connecting section structure of the distal end portion 21 of the guide vane 20, whereas FIG. 2B shows a perspective view of a connecting section structure of the proximal end portion 22 of the guide vane 20, and hereinafter, the connecting section structures of the guide vane 20 will be described in detail based on the drawings.

First, as shown in FIG. 2A, the distal end portion 21 of the guide vane 20 is sandwiched by a pair of opposing walls 30a and 30b that is a part of the connecting support body 30 from both sides in a vane thickness direction. The opposing walls 30a and 30b are connected to the distal end portion 21 by bolts 34 and nuts 35 in a plurality of spots (FIG. 2A illustrates only two spots). The connecting support body 30 including the opposing walls 30a and 30b is formed from a metal such as an aluminum alloy and a titanium alloy, and is connected to the fan case 5 which is also formed from a metal via the fitting flanges 5a and 5a.

Of the bolts 34 and nuts 35 of the opposing walls 30a and 30b, the nut 35 at a leading edge side holds a circular terminal 40a in a space from the one opposing wall 30a. The circular terminal 40a forms an end portion of a conductive wire 40 (a conductor) that is a metal wire, and the conductive wire 40 extends to the leading edge side along an outer surface of the one opposing wall 30a from the circular terminal 40a. The conductive wire 40 is folded back to the proximal end portion 22 side at a leading edge of the distal end portion 21 of the guide vane 20, and is installed along the leading edge of the guide vane 20 while passing along the inner surface side of the sheath 23. The conductive wire 40 is formed from a metal with lower electric resistance than the guide vane 20.

Further, as shown in FIG. 2B, the proximal end portion 22 of the guide vane 20 is also held by a pair of opposing walls 31a and 31b of a connecting support body 31 from both sides in the vane thickness direction. The opposing walls 31a and 31b are also connected to the proximal end portion 22 by the bolts 34 and the nuts 35 at a plurality of spots (FIG. 2B illustrates only one spot). The connecting support body 31 including the opposing walls 31a and 31b is also formed from a metal such as an aluminum alloy and a titanium alloy, and is connected to the engine internal cylinder 3 which is also formed from a metal via the fitting flanges 32a and 32a of the fan frame 32.

Of the bolts 34 and the nuts 35 of the opposing walls 31a and 31b, the nut 35 at the leading edge side illustrated in FIG. 2B holds a circular terminal 40b that is another end portion of the conductive wire 40, in a space from the one opposing wall 31a. The conductive wire 40 extends to the leading edge side along an outer surface of the one opposing wall 31a from the circular terminal 40b. The conductive wire 40 is folded back to the distal end portion 21 side at the leading edge of the proximal end portion 22 of the guide vane 20, and is installed along the leading edge of the guide vane 20 while passing along the inner surface side of the sheath 23.

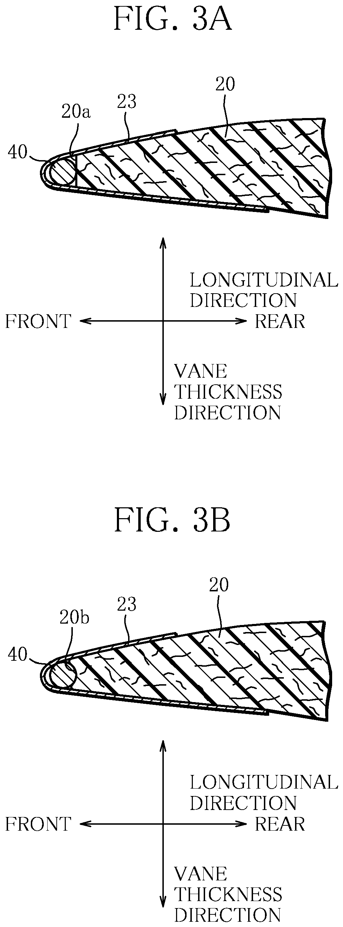

Further, here, FIG. 3A shows a sectional view of the guide vane taken along a line A-A in FIG. 1.

As shown in FIG. 3A, the leading edge of the guide vane 20 is cut out, and a leading edge surface 20a along the vane thickness direction is formed. The leading edge surface 20a is covered with the sheath 23 which is U-shaped in section, and the conductive wire 40 is installed in a space between the leading edge surface 20a and the sheath 23. The sheath 23 has an inner surface coated with an adhesive, and the conductive wire 40 is covered with the sheath 23 via the adhesive.

As described above, in the stator vane structure according to the embodiment, the distal end portion 21 and the proximal end portion 22 of the guide vane 20 formed from a composite material are firstly supported by the connecting support bodies 30 and 31 which are respectively formed from a metal. Subsequently, the pair of connecting support bodies 30 and 31 of the distal end portion 21 and the proximal end portion 22 are connected by the conductive wire 40 by passing the conductive wire 40 through the space between the leading edge surface 20a of the guide vane 20 and the sheath 23.

As above, by connecting the connecting support bodies 30 and 31 which are formed from a metal, by the conductive wire 40, the guide vane 20 from the distal end portion 21 through the proximal end portion 22 are made capable of electrically continuing. Accordingly, when the fan case 5 receives a lightning strike, a lightning current flows from the fan case 5 to the connecting support body 30 at the distal end portion 21 side of the guide vane 20 through the fitting flange 5a, and flows to the conductive wire 40 from the bolts 34 and the nuts 35 of the opposing walls 30a and 30b. Subsequently, the lightning current passes through the conductive wire 40, flows to the connecting support body 31 from the bolts 34 and the nuts 35 of the opposing walls 31a and 31b at the proximal end portion 22 side, and flows to the engine internal cylinder 3 at the engine body section 2 side via the fitting flange 32a of the fan frame 32. In this manner, even when the composite material having high electric resistance is adopted as the guide vane 20, the lightning current received by the fan case 5 can be passed to the engine body section 2 side via the conductive wire 40.

Further, since the conductive wire 40 is placed between the leading edge surface 20a of the guide vane 20 and the sheath 23, the conductive wire 40 does not protrude at the surface of the guide vane 20, and does not have an influence on the controlling function of the guide vane 20. Further, between the conductive wire 40 and the sheath 23 formed from a metal material, the adhesive which is coated on the inner surface of the sheath 23 is interposed, whereby the adhesive also performs a function of a coating for the conductive wire 40, and a spark between the conductive wire 40 and the sheath 23 can be also prevented.

Further, the sheath 23 which is the metal for erosion prevention is relatively easily replaceable since the sheath 23 is replaced each time the sheath 23 is worn, and when the sheath 23 is removed for replacement, the conductive wire 40 can be visually observed, whereby an inspection of the conductive wire 40 can be also performed easily.

Accordingly, in the stator vane structure according to the embodiment, in the turbofan jet engine 1, a lightning current due to a lightning strike can be fended off while the controlling function of the stator vane which is formed from the composite material is ensured, and an inspection can be also performed easily.

Further, the jet engine 1 which adopts the stator vane structure like this can ensure resistance to a lightning strike while obtaining a light weight, high strength and high durability by the guide vane 20 which is formed from the composite material.

The above is the explanation of the present embodiment, but the embodiment of the present disclosure is not limited to this.

For example, FIG. 3B shows a modification example of the stator vane structure according to the present disclosure. FIG. 3B differs from the above described embodiment shown in FIG. 3A only in the shape of the leading edge surface of the guide vane 20. The other components are assigned with the identical reference signs to those in the above described embodiment, and explanation thereof will be omitted here.

In the above described embodiment, the leading edge surface 20a of the guide vane 20 is a surface that is along the vane thickness direction, whereas a leading edge surface 20b of the modification example has a section forming a surface (a recessed section) that is recessed in a C-shape in accordance with an outer circumferential shape of the conductive wire 40 (the conductor). The recessed section like this may be formed at a part of the leading edge of the guide vane 20, or may be formed in a whole region of the leading edge.

The leading edge surface 20b of the guide vane 20 has the recessed section like this, whereby the conductive wire 40 is easily installed in the leading edge of the guide vane 20, and stable wiring which is difficult to displace can be realized, in addition to the effect of the above described embodiment.

Further, with respect to the other components, the present disclosure is not limited to the above described embodiment and modification example.

For example, in the above described embodiment and modification example, the conductive wire 40 is installed in the leading edge of the guide vane 20, but the conductive wire can be covered with the sheath in order not to influence the controlling function, and such a structure may be adopted that a recessed section in which the conductive wire can be installed is provided in a range in which the sheath can be attached in the leading edge section of the guide vane, and the conductive wire is installed in the recessed section.

Further, in each of the above described embodiment and modification example, only the single conductive wire 40 is provided, but a plurality of conductive wires may be provided. Further, a feature which is part of the invention, a rod-shaped or a plate-shaped conductor is provided in place of the conductive wire.

Further, in the above described embodiment, both the end portions of the conductive wire 40 are the circular terminals 40a and 40b, but terminals in other shapes such as a Y-shape may be used. Further, the terminals of the conductive wire 40 do not have to be fixed by the bolts 34 and the nuts 35, and other fitting tools may be used.

### (Aspects of the present disclosure)

A first aspect of the present disclosure includes a fan case of a turbofan jet engine, an engine body section of the turbofan jet engine, a stator vane that connects the fan case and the engine body section, and is formed from a composite material of a thermosetting resin or a thermoplastic resin and reinforced fibers, a metal for erosion prevention that covers at least a leading edge section of the stator vane, a pair of connecting support bodies that connect first end of the stator vane and the fan case, and second end of the stator vane and the engine body section and are formed from a metal, and a conductor that passes through a space between the leading edge section of the stator vane and the metal for erosion prevention, and connects the connecting support bodies at the first end and second end of the stator vane.

A second aspect of the present disclosure is such that a recessed section that supports the conductor is formed in the leading edge section of the stator vane.

A third aspect of the present disclosure is such that as a stator vane structure that constitutes the turbofan jet engine, the stator vane according to the first aspect or the second aspect is used.

### Explanation of Reference Signs

- 1: Jet engine (turbofan jet engine)
- 2: Engine body section
- 3: Engine internal cylinder
- 5: Fan case
- 5a: Fitting flange
- 20: Guide vane (stator vane)
- 20a, 20b: Leading edge surface
- 21: Distal end portion
- 22: Proximal end portion
- 30, 31: Connecting support body
- 32: Fan frame
- 32a: Fitting flange
- 34: Bolt
- 35: Nut
- 40: Conductive wire (conductor)
- 40a, 40b: Circular terminal

## Claims

1. A stator vane structure, comprising:
a fan case (5) of a turbofan jet engine (1);
an engine body section (2) of the turbofan jet engine (1) ;
a stator vane (20) that connects the fan case (5) and the engine body section (2), and is formed from a composite material of a thermosetting resin or a thermoplastic resin and reinforced fibers;
a metal for erosion prevention (23) that covers at least a leading edge section of the stator vane (20);
a pair of connecting support bodies (30, 31) that connect first end (21) of the stator vane (20) and the fan case (5), and second end (22) of the stator vane (20) and the engine body section (2) and are formed from a metal; and
a conductor (40) that passes through a space between the leading edge section of the stator vane (20) and the metal for erosion prevention (23), and connects the connecting support bodies (30, 31) at the first end (21) and second end (22) of the stator vane (20),
**characterized in that** the conductor (40) is a metal wire or rod-shaped.

2. The stator vane structure according to claim 1,
wherein a recessed section that supports the conductor (40) is formed in the leading edge section of the stator vane (20) .

3. A turbofan jet engine (1),
wherein as a stator vane structure that constitutes the turbofan jet engine (1), the stator vane structure according to claim 1 or 2 is used.

## Patentansprüche

1. Statorschaufelstruktur, umfassend:
ein Gebläsegehäuse (5) eines Turbostrahl-Düsentriebwerks (1) ;
einen Triebwerkskörperabschnitt (2) des Turbostrahl-Düsentriebwerks (1);
eine Statorschaufel (20), die das Gebläsegehäuse (5) und den Triebwerkskörperabschnitt (2) verbindet und aus einem Verbundmaterial aus einem duroplastischen Harz oder einem thermoplastischen Harz und Verstärkungsfasern gebildet ist;
ein Erosionsverhinderungsmetall (23), das zumindest einen Anströmkantenabschnitt der Statorschaufel (20) bedeckt;
ein Paar von Verbindungsstützkörpern (30, 31), die ein erstes Ende (21) der Statorschaufel (20) und das Gebläsegehäuse (5) und ein zweites Ende der Statorschaufel (20) und den Triebwerkskörperabschnitt (2) verbinden und aus einem Metall gebildet sind; und
einen Leiter (40), der durch einen Raum zwischen dem Anströmkantenabschnitt der Statorschaufel (20) und dem Erosionsverhinderungsmetall (23) verläuft und die Verbindungsstützkörper (30, 31) am ersten Ende (21) und zweiten Ende (22) der Statorschaufel (20) verbindet,
**dadurch gekennzeichnet, dass** der Leiter (40) als ein Metalldraht oder stabförmig ausgebildet ist.

2. Statorschaufelstruktur nach Anspruch 1,
wobei ein ausgenommener Abschnitt, der den Leiter (40) abstützt, im Anströmkantenabschnitt der Statorschaufel (20) ausgebildet ist.

3. Turbostrahl-Düsentriebwerk,
wobei als Statorschaufelstruktur, die das Turbostrahl-Düsentriebwerk (1) darstellt, die Statorschaufelstruktur nach Anspruch 1 oder 2 verwendet wird.

## Revendications

1. Structure d'aube de stator, comprenant :
un carter de soufflante (5) d'un moteur turboréacteur à double flux (1) ;
une section corps de moteur (2) du moteur turboréacteur à double flux (1) ;
une aube de stator (20) qui relie le carter de soufflante (5) et la section corps de moteur (2), et est composée d'un matériau composite d'une résine thermodurcissable ou d'une résine thermoplastique et de fibres renforcées ;
un métal anti-érosion (23) qui recouvre au moins une section bord d'attaque de l'aube de stator (20) ;
une paire de corps de support de liaison (30, 31) qui relient une première extrémité (21) de l'aube de stator (20) et le carter de soufflante (5), et une deuxième extrémité (22) de l'aube de stator (20) et la section corps de moteur (5) et sont composés d'un métal ; et
un conducteur (40) qui passe par un espace entre la section bord d'attaque de l'aube de stator (20) et le métal anti-érosion (23), et relie les corps de support de liaison (30, 31) au niveau de la première extrémité (21) et de la deuxième extrémité (22) de l'aube de stator (20),
**caractérisée en ce que** le conducteur (40) est un fil de métal ou en forme de tige.

2. La structure d'aube de stator selon la revendication 1,
sachant qu'une section en retrait qui supporte le conducteur (40) est formée dans la section bord d'attaque de l'aube de stator (20).

3. Moteur turboréacteur à double flux (1),
sachant que, comme structure d'aube de stator qui constitue le moteur turboréacteur à double flux (1), la structure d'aube de stator selon la revendication 1 ou 2 est utilisée.
